Europäisches Patentamt

European Patent Office

Office européen des brevets

(11) Publication number: **0 305 037**
**A1**

## (12) EUROPEAN PATENT APPLICATION

(21) Application number: 88306321.6

(22) Date of filing: 11.07.88

(51) Int. Cl.⁴: **H02K 5/10** , **H02K 13/00**

(30) Priority: 20.08.87 GB 8719714

(43) Date of publication of application:
01.03.89 Bulletin 89/09

(84) Designated Contracting States:
DE FR GB IT

(71) Applicant: **Johnson Electric Industrial
Manufactory Limited
Johnson Building 14-16 Lee Chung Street
Chaiwan(HK)**

(72) Inventor: **Wang, Patrick Shui-Chung
22 Belleview Drive, 10/F Repulse Bay Garden
Repulse Bay Hong Kong(HK)**

(74) Representative: **Higgins, Michael Roger et al
MARKS & CLERK 57/60 Lincoln's Inn Fields
London WC2A 3LS(GB)**

(54) Electric motor.

(57) A d.c. electric motor has an oil collector located fast on a motor shaft (2), between a lubricated bearing (11) and a commutator (4), and/or on a bearing support (10) to surround the bearing. The oil collector(s) comprises a powdery or granular oil-absorbing material adhered to a paper ring or strip (29, 33) which is adhered to an annular member (30) mounted as a tight fit on the motor shaft (2) adjacent the commutator (4) or which is adhered to the bearing support (10).

FIG. 2

EP 0 305 037 A1

## Electric Motor

The present invention relates to an electric motor and particularly but not exclusively to a small, fractional horsepower, permanent magnet direct current (P.M.D.C.) motor.

During recent years lubrication oils have been developed having very low freezing points so that in low temperature environments, e.g. -40°C, such as is specified as a typical environment in which automobiles and all associated equipment are expected to function normally, the oil in the bearings of moving parts such as motors does not become frozen. These new oils have very low surface tensions and migrate with ease. As a motor runs the bearings heat up and some impregnated oil is driven out of the bearings. This oil can then migrate with ease to areas where it is most undesirable such as commutators and brush cage constructions.

For example, in small, fractional horsepower, P.M.D.C. motors a commutator typically comprises a number of copper segments on a cylindrical support. The segments are spaced apart by a small amount, so that there is a gap between adjacent segments. As a brush in contact with the commutator segments wears down, particles of carbon become embedded in the gaps. As the motor rotates these may be thrown off centrifugally. However, any oil migrating to the commutator surface will mix with the carbon particles to hold them in the gaps between the segments, which eventually produces an electrical short between the segments causing a breakdown or loss in efficiency of the motor.

In seeking to mitigate this drawback, the present invention provides an electric motor comprising a shaft rotatably mounted in a lubricated bearing, and a powdery or granular oil-absorbing or retaining material (hereinafter referred to as "oil absorbing" material) supported so as in use to collect lubricant which migrates from the bearing.

Preferably, the powdery or granular material which holds the absorbed oil is a material such as that sold under the brand name MOP, by Castrol Limited, a U.K. Company.

Preferably, the shaft of the motor carries a commutator and oil absorbing material is supported by an annular member tightly fitted on the motor shaft adjacent to the commutator so that the oil absorbing material collects lubricant migrating from the bearing towards the commutator. In this case, conveniently, the oil absorbing material is mounted on one side of a piece of paper coated on both sides with adhesive, the other side of the paper being adhered to the annular member.

Additionally or alternatively, oil absorbing material may be supported by a support for said bearing to surround said bearing. In this case, conveniently, the oil absorbing material is mounted on one side of a piece of paper coated on both sides with adhesive, the other side of the paper being adhered to the bearing support.

The invention will now be more particularly described, by way of example, with reference to the accompanying drawings, in which

Figure 1 is a longitudinal cross-section through a permanent magnet d.c. motor embodying the invention; and

Figure 2 is an enlarged view of part of the motor of Figure 1 enclosed by rectangle A.

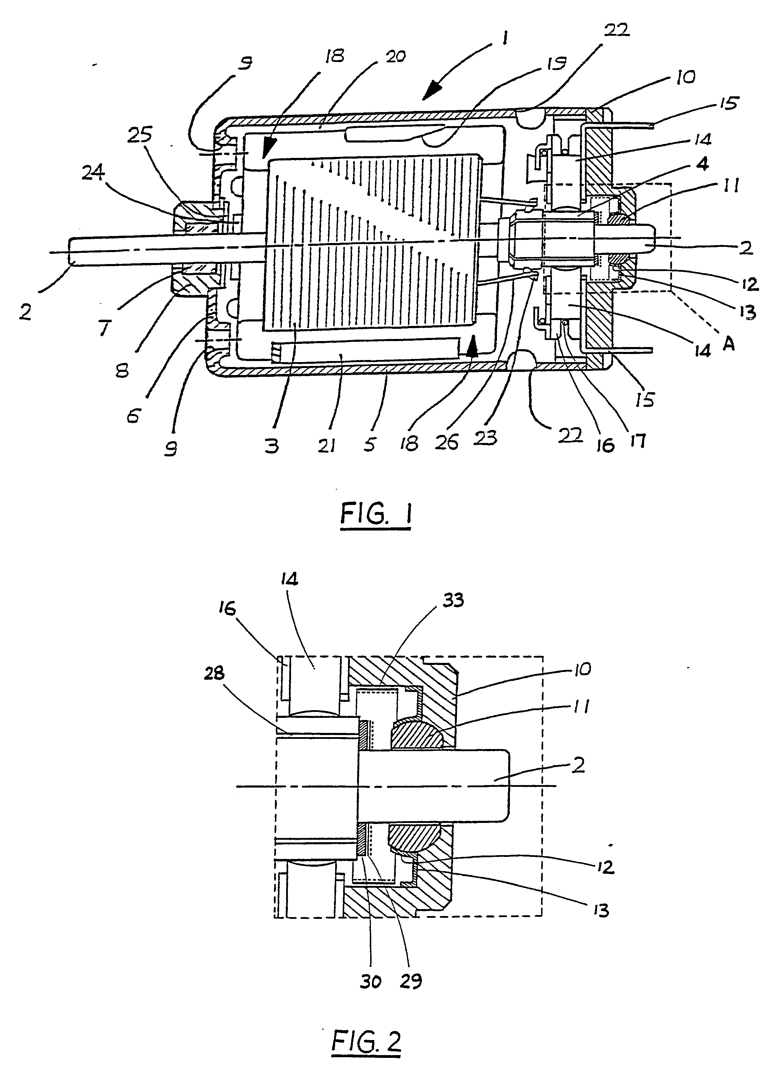

Referring to Figure 1, a small, fractional horsepower permanent magnet direct current motor 1 is illustrated. The motor comprises a motor shaft 2 which carries a wound armature 3 and commutator 4. The commutator 4 and armature 3 are mounted fast on the shaft and the armature is wound and connected to the commutator in a manner generally known in the art. Tangs 23 on the commutator are forged to wires 26 which form the winding coils of the armature.

The shaft 2 is mounted in a cylindrical metal casing 5.

Casing 5 is closed at one end by an integrally formed end plate 6. End plate 6 carries a bearing 7 in a housing 8, the shaft 2 being journalled in the bearing 7. A brass collar 24 is a force fit on the shaft 2 to limit the axial movement of the shaft through bearing 7. A washer 25 is mounted on the shaft between the brass collar 24 and bearing 7. End plate 6 has a plurality, typically 4, of circumferentially extending slots 9 for ventilation of the inside of the motor.

A plastics end cap 10, typically of nylon, houses a self aligning sintered bearing 11 which is held in place by axially extending tabs 12 of a washer 13 which is pressed into the end cap. The end cap supports brush gear comprising a pair of carbon brushes 14 which are mounted in brush cages 16 and which are urged against the commutator 4 by torsion springs 17 connected to power supply tags 15.

In the example shown the casing 5 carries two permanent magnets 18, which each bear at one axial edge 20 against a respective tang 19 and are urged apart at their other axial edges by a 'U' shape spring 21.

Circumferentially extending slots 22 are provided in the casing 5 in the region between the brushes 14 and armature 3 for ventilation.

Referring to Figure 2, the commutator 4 comprises a plurality of copper segments 27 which are laid on a support which is fast with the shaft 2. It will be appreciated that other types of commutator construction are known in the art and the present invention is not limited to use with any particular type. A gap 28 is formed between the segments 27, to isolate electrically the adjacent segments.

As the segments 27 rotate past brush 14, carbon particles from the brush become embedded in the gaps 28.

In prior art designs it has been found that oil from bearing 7 will seep or migrate along the shaft 2 onto the segments 27. This oil mixes with the carbon particles to cause them to stick in the gaps 28, eventually shorting adjacent segments 27.

In accordance with an embodiment of the present invention oil absorbing material is supported by an annular member 30. The member 30 may be a metal washer mounted as a tight fit on the shaft 2 or may be of rubber, or other elastic material, so that it may be stretched to fit on the shaft 2, forming an oil tight joint with the shaft 2.

The oil absorbing material may be a granular material such as that sold by Castrol Limited (a U.K. Company) under the brand name MOP. This material holds absorbed oil. The material is reduced to powdery form and is sputtered on one side of a piece of paper, preferably as shown a thin paper ring 29, coated on both sides with adhesive. The other side of the ring 29 is then adhered to the member 30.

Oil which migrates along shaft 2 from the bearing 11, encounters the member 30 with the powder coated paper ring 29 and is held at that point by the powder preventing migration onto the commutator surface.

It will be appreciated by those in the art that the quantity of oil leaving the bearing 11 is very small, being a fraction of the oil impregnated in bearing 11 on assembly of the motor.

The invention is not limited to use with sintered bearings, such as bearing 11, and is equally applicable to other types such as ball or roller bearings.

The powder coated paper ring 29 will form a high friction surface if it bears against the bearing 11 and powder make be forced loose. It is therefore preferable to incorporate a degree of end loading in the motor, in the direction of bearing 7. This can be achieved by the positioning of the magnets 18, as is known in the art.

Further oil absorbing material is sputtered on one side of a piece of paper, conveniently a thin paper strip 33 coated on both sides with adhesive. The other side of the strip 33 is then adhered to the end cap 10 to surround the bearing 11. The oil absorbing material on the paper strip 33 will prevent migration of oil along the inner surface of the end cap and this will prevent oil from migrating into the cages 16 and mixing with the carbon of the brushes 14. Moreover, if as shown the paper strip 33 surrounds the paper ring 29, any oil thrown off the ring 29 by centrifugal force will strike the strip 33.

Various modifications will be apparent to those in the art and it is desired to include all such modifications as fall within the scope of the accompanying claims. For example, it may be possible to support the oil absorbing material in other ways. Moreover, the powder coated paper ring or strip may be omitted.

## Claims

1. An electric motor comprising a shaft (2) rotatably mounted in a lubricated bearing (11), and oil-absorbing material supported so as in use to collect lubricant which migrates from the bearing, wherein the oil-absorbing material is a powdery or granular material which holds the absorbed oil.

2. An electric motor as claimed in claim 1, wherein the shaft (2) of the motor (1) carries a commutator (4) and wherein the oil-absorbing material is supported on an annular member (30) tightly fitted on the motor shaft (2) adjacent to the commutator (4) so that the oil-absorbing material collects lubricant migrating from the bearing (11) towards the commutator (4).

3. An electric motor as claimed in claim 2, wherein the oil-absorbing material is adhered to one side of a piece of paper (29), the other side of which is adhered to the annular member (30).

4. An electric motor as claimed in any one of the preceding claims, wherein the oil-absorbing material is supported on a support (10) for said bearing (11) to surround said bearing (11).

5. An electric motor as claimed in 4, wherein the oil-absorbing material is adhered to one side of a piece of paper (33), the other side of which is adhered to the bearing support (10)

EP 0 305 037 A1

FIG. 1

FIG. 2

# EUROPEAN SEARCH REPORT

European Patent Office

Application Number

EP 88 30 6321

## DOCUMENTS CONSIDERED TO BE RELEVANT

| Category | Citation of document with indication, where appropriate, of relevant passages | Relevant to claim | CLASSIFICATION OF THE APPLICATION (Int. Cl.3) |
|---|---|---|---|
| A | DE-A-2 803 956 (PAPST-MOTOREN KG) * page 10, lines 16-19; figure 1 * | 1 | H 02 K 5/10 H 02 K 13/00 |
| A | DE-A-1 438 379 (STANDARD ELEKTRIK LORENZ AG) * page 7, lines 18,19; figure 1 * | 1 | |
| A | GB-A- 931 340 (LENINA) * page 1, lines 12-31,36-49; figure * | 1 | |

TECHNICAL FIELDS SEARCHED (Int. Cl.3)

H 02 K 5/00
H 02 K 13/00
H 02 K 15/00
H 01 R 39/00

The present search report has been drawn up for all claims

| Place of search | Date of completion of the search | Examiner |
|---|---|---|
| BERLIN | 18-11-1988 | LEOUFFRE M. |

EPO FORM 1503 03.82 (P0401)